# EUROPEAN PATENT SPECIFICATION

(11) **EP 3 081 319 B1**
(45) Date of publication and mention of the grant of the patent: **09.09.2020**
(21) Application number: 14870491.9
(22) Date of filing: 11.12.2014
(51) Int. Cl.: B21D 53/78, B23P 15/04, B21K 3/04, B21D 26/02

(54) **HOLLOW FAN BLADE PREPARATION METHOD**
HERSTELLUNGSVERFAHREN FÜR HOHLE GEBLÄSESCHAUFEL
PROCÉDÉ DE FABRICATION DE PALE DE VENTILATEUR CREUSE

(30) Priority: 12.12.2013 RU 2013155398
(43) Date of publication of application: 19.10.2016
(73) Proprietor: Institute For Metals Superplasticity Problems Of The Russian Academy Of Sciences, Bashkortostan Republic 450001 (RU); Open Joint Stock Company "Aviadvigatel", Perm 614990 (RU); Joint Stock Company "UFA Engine Industrial Association", Ufa 450039 (RU)
(72) Inventor: INOZEMTSEV, Alexander Alexandrovich, Perm 614039 (RU); MULYUKOV, Radik Rafikovich, Ufa 450022 (RU); PAVLINICH, Sergey Petrovich, Ufa 450096 (RU); ARTYUKHOV, Alexander Viktorovich, Ufa 450043 (RU); SAFIULLIN, Rinat Vladikovich, Ufa 450092 (RU); TRIFONOV, Vadim Gennadievich, Ufa 450058 (RU); KHARIN, Sergey Alexandrovich, Perm 614051 (RU); MANAPOV, Irek Usmanovich, Ufa 450098 (RU); MOROZOV, Mikhail Alexandrovich, Perm 614111 (RU)
(74) Representative: Hoffmann Eitle
(86) International application number: PCT/RU2014/000931
(87) International publication number: WO 2015/088393

(56) References cited:
- EP-A1- 0 568 201
- EP-A2- 1 188 497
- WO-A1-2012/173512
- RU-A- 2011 124 220
- RU-C2- 2 412 017
- US-A- 4 304 821
- US-A- 4 304 821
- US-A1- 2006 005 594

## Description

The invention relates to the metal forming art, and, more particularly, to methods of manufacturing a hollow fan blade for a gas turbine engine (GTE) using diffusion welding and superplastic forming.

The present method may be applied in the aircraft engine production to manufacture a wide-chord fan blade, for which weight reduction is essential and assumes making the blade hollow.

The blade has a complex airfoil shape generally described in [1] which discloses structural features defining basic performance characteristics of the blade, common to both fan and compressor blades.

Airfoil shape of the blade cross-section is formed by expansion and pressure lines that embrace the center line of the blade airfoil shape, bent from the structural entrance angle of the blade airfoil shape to the exit structural angle of the blade airfoil shape. The blade has an entrance edge and an exit edge in the longitudinal direction according to location of the design angles. The blade also has a peripheral edge. Maximum bend of the center line of the blade airfoil shape is chosen so that to provide a smooth increase in the pressure gradient on the blade surface.

In compliance with the shape of the bent center line of the blade airfoil the expansion line of one blade and the pressure line of adjacent blade form the configuration of a flow path of the blade channel, which provides a smooth deceleration of supersonic flow in the system of weak oblique shocks and formation of a trailing shock wave in the exit part of the blade channel. This results in a lower pressure loss at deceleration of supersonic flow, and in increased efficiency and stall margin of the fan or compressor.

The expansion line and pressure line lie on the surfaces that are referred to a suction side and a pressure side of the blade, respectively.

The blade has a foot portion by which it is attached to the hub, and an airfoil.

Methods for manufacturing compressor and fan blades have differences. As noted above, it is of vital importance that an axial-flow fan blade, having larger overall dimensions than a compressor blade, the more so a wide-chord blade, is made hollow. Traditionally, the term "hollow blade" is used, though only the blade airfoil is hollow. The airfoil consists of skins, one of which forms a suction side and the other a pressure side of the blade, and a core in the form of stiffening ribs. The skins and the core are made of a titanium alloy.

Parameters of stiffening ribs, including the slope angle thereof and the distance between them, are determined by relative position of diffusion welding joints between the skins and the core, and areas where joints between them are missing. To this end, a screen pattern is designed (predetermined), according to which a stop-off material is applied to contacting surfaces of the preforms to prevent bonding the preforms at diffusion welding, and defining thereby areas to be joined.

In process of superplastic forming a cavity between the skin preforms and a final external design shape of the suction side and the pressure side of the blade are formed. At the same time, in the process of forming the core preform the areas, not subjected to joining with the skin preforms, upon being stretched form stiffening ribs, that is, the internal structure of the blade. The most common internal structure is formed by sloping ribs of a frame [2, 3, 4] with a triangular grid in the cross section of the blade. This structure is formed according to a screen pattern in the form of alternating strips deposited on the contacting surfaces of the skin and core preforms. The discussed blade structure can better withstand collision with various objects, including birds, owing to the spring ability of the slope stiffening ribs, and thereby absorb and dissipate the impact energy. In addition, this structure contributes best to damping vibrations that unavoidably occur in operation of the fan.

Methods of manufacturing a hollow blade are based, as noted above, on the use of two basic steps: diffusion welding and superplastic forming [2, 3, 4]. All three methods are basically similar. Differences between them will be mentioned further in a more detailed discussion thereof.

The mostly known method of manufacturing a hollow fan blade is disclosed in the description to patent [2]. The method comprises the steps of applying a stop-off material to prevent joining the preforms on the surfaces of the skin preforms and/or the core preform, which are not to be bonded in diffusion welding, in accordance with a predetermined screen pattern.

The stop-off material is missing over the entire perimeter of the blade to provide joining the preforms in the foot portion, and the entrance, exit and peripheral edges of the blade.

The skin and core preforms are assembled into a stack, which is sealed along edges, with the exception of a place for mounting at least one tube. In the tube mounting place the skin preforms are provided with a groove and the core preform is provided with a slot. Then, a tube is mounted, through which cavities in the stack are sequentially evacuated and filled with an inert gas to remove oxygen. By heating the stack, the binder of the stop-off material is removed (evaporated) from the stack cavities under continuous evacuation thereof. Then the stack is fully sealed. Diffusion welding of the preforms is carried out at a predetermined temperature and pressure to produce an integral structural preform.

Before the step of superplastic forming, cavities of the integral structural preform are again sequentially evacuated and filled with an inert gas to remove oxygen.

To accomplish superplastic forming the integral structural preform is placed in a dedicated die between its forming halves and heated together with the die, and a working fluid is supplied into cavities between the core preform and skin preforms to form stiffening ribs and final airfoil shape of the blade in superplasticity regime. The working fluid is commonly argon.

A different tube is used for supplying argon, which can be mounted at the same place as the previous tube. This tube has a smaller cross-section because argon should be supplied through it rather slowly to ensure the speed of deformation of the preforms, corresponding to the superplasticity conditions.

To distribute argon along the alternating strips on each side of the core in the step of superplastic forming and in other steps such as removing oxygen from cavities of the stack and then the integral structural preform, a collector zone is provided, to which the tube is connected. Description of method [2] does not mention on which side of the integral structural preform a collector zone is disposed and the tubes are mounted, respectively. This information is also missing in the drawings explaining the method, since the stack of preforms is shown without a foot portion [2, Fig. 5]. Therefore, location of the collector zone is nonessential for implementing the method [2]. It can be disposed either on the side of the foot portion, or on the side of the peripheral edge of the blade.

In the collector zone the core preform should not be joined with any of the skin preforms so that two cavities are formed as a partition; that is why a stop-off material is also applied in the collector zone on contacting surfaces of the preforms to prevent joining the preforms at diffusion welding.

The manufacture of the blade also comprises a step of giving an airfoil shape to the blade, comprising bending the integral structural preform to form the pressure side and the suction side of the blade, and twisting the airfoil of the blade. This step is accomplished before superplastic forming of the preforms.

The manufacture of the blade comprises a step of breaking the adhesive bond that appears between the preforms and the stop-off material at the step of diffusion welding under a substantially high pressure. The step of breaking the adhesive bond may be accomplished after the step of giving an airfoil shape to the integral structural preform as in method [2] or immediately after the step of diffusion welding [3]. This is the main difference of the method [3] from the method [2].

In addition, the description of method [3] mentions that the collector zone is formed on the side of the foot portion of the blade.

In strength calculations and in production and testing of prototypes of the blades it has been found that various tubes required for performing the method steps, and the collector zone, respectively, are preferably disposed on the side of the peripheral edge of the blade. This assists in preserving the strength of the root of the airfoil, which is important in terms of operating characteristics of the blade and the fan as a whole. Arrangement of the collector zone on the side of the foot portion of the blade may be attributed to disadvantages of the method [3].

A common disadvantage of the methods [2, 3] is that even after breaking the adhesive bond the preforms still tightly adhere to each other at the initial time of superplastic forming. This situation can be defined in other words as "sticking" the preforms to each other. The "sticking" poses a certain problem; in particular, it hinders penetration of a sufficient amount of argon between the core and skin preforms. The problem primarily concerns the collector zone.

As a result of hindered penetration of gas between the core and skin preforms the core preform may be misaligned in the collector zone, as mentioned in the description of the conventional method of manufacturing a hollow fan blade [4]. Misalignment of the core preform may impair the conditions for formation of stiffening ribs and lead to defects in the manufacture of the blade.

Currently, attempts are being made to provide technical solutions that enable "unsticking" the preforms from each other in the areas located in the collector zone of the integral structural preform at the initial time of superplastic forming, in particular, this is done in the aforementioned method of manufacturing a hollow fan blade [4].

The method [4], as well as methods [2, 3], comprises as the main steps: diffusion welding the preforms of a suction side, a pressure side and a core preform (membrane) disposed between them, and superplastic forming the preforms. The method comprises applying stop-off material to contacting surfaces of the skin and core preforms to prevent bonding the preforms. The stop-off material is applied in a predetermined screen pattern. The pattern is formed by alternating strips, the arrangement of which defines the configuration of stiffening ribs.

To form a collector zone the stop-off material is applied along the peripheral edge to provide the already mentioned advantage of preserving the strength of the root portion of the airfoil. In the method [4] in a region directly adjacent to the peripheral edge diffusion bonding of one of the skin preforms and the core preform is provided in the form of a strip extending along the entire chord or at least along part of the chord of the blade. As a result, in the collector zone of the integral structural preform the size of the diffusion bond in a span-wise direction of the blade between the pressure side preform and the core preform is greater than the size of the diffusion bond between the suction side preform and the core preform. Or vice versa, the size of the diffusion bond in a span-wise direction of the blade between the suction side preform and the core preform is greater than the size of the diffusion bond between the pressure side preform and the core preform.

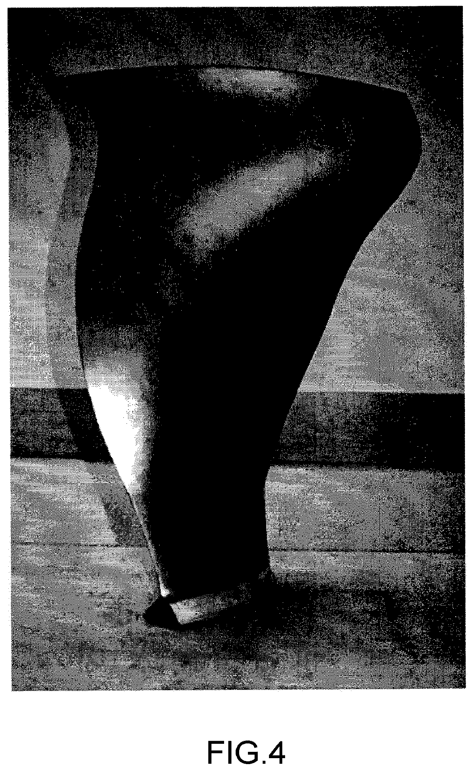

Owing to the strip-shaped joint [4, Fig. 4A] of the core and suction side preforms, upon supplying argon the core preform is lifted together with the suction side preform over the pressure side preform, thereby providing gas flow between the core and pressure side preforms in the collector zone of the blade.

In another embodiment, owing to the strip-shaped joint of the core and the pressure side preforms, upon supplying argon the core preform separates from the suction side preform, thereby providing gas flow between the core and suction side preforms in the collector zone of the blade.

It is assumed that this method expands the abilities of the method described in the same document [4], in which attempts were made to use a pattern allowing formation in the collector zone of joints between the core preform and one of the skins preforms in the form of e.g. dots that would facilitate "unsticking" the core preform from the other skin preform. However, dots were unable to perform the function, as gas flowed around the dots and continued to be accumulated at the end of the integral structural preform thereby causing misalignment of the core preform [4].

Description of the method does not specify the width of the strip, whereas at a very small width the process of "unsticking" the preforms from each other will not progress. This fact is confirmed by experiments and the description of the method [4], where to ensure "unsticking" it is recommended to use a pattern in the form of dots. Thus, the core preform is bonded to one skin preform by a strip and to the other skin preform by dots [4, Fig. 4a, 4b].

Main disadvantage of the method [4] is due to the presence of joints made by diffusion welding in the form of small dots and a narrow strip. As known from numerous references, in particular from the description of a method of manufacturing articles by diffusion welding and superplastic forming [5], in diffusion welding defects inevitably arise in the form of clusters of micropores, as well as in the form of undercuts at ends of the joint area. Clusters of micropores generally also appear at the ends of the joint area. If the entire joint area is commensurate with the size of the region, in which the abovementioned defects are concentrated, the joint becomes very weak.

In addition, presence of the strip leads to bending the core preform in the collector zone and emergence of a stress raiser at the bend place. Presence of dots leads to non-uniform thinning of the already thin core preform.

In service, under the effect of various external factors and due to cantilever attachment of the blade to the hub and significant span magnitude of the blade the peripheral area of the blade is subjected to the greatest elastic deformation which in principle can disrupt the bonds created by diffusion welding, especially if these bonds are weak.

Given the fact that the peripheral area of the blade is the least loaded part of the blade, it can be assumed that disruption of bonds between the core and the skins and even breaking off the core from the skins in the collector zone will not impair the basic operating characteristics of the blade. But the part of the core, which is disengaged from joint with the skins and bent, will contribute to additional vibration in the structure and this may ultimately break the bonds at locations of stiffening ribs.

For this reason, the presence of any stress raisers in the peripheral area of the blade, in addition to the inevitable stress raisers appearing during formation of stiffening ribs, is highly undesirable. As a result, it is undesirable to have additional joints of the core and skin preforms in the peripheral area of the blade.

Another disadvantage of the discussed steps of the method [4] is that they add complexity to the already complicated step of applying a stop-off material to the surface of the preforms, which prevents joining the preforms at diffusion welding.

Thus, in use of the method [4] the "sticking" between the preforms at the initial time of superplastic forming cannot be overcome without impair to the blade quality and increasing the complexity of its manufacture.

The most relevant prior art is a method of manufacturing a hollow fan blade, described in the patent [2]. The method is very close to the claimed method in technical essence since the method description discloses features - steps and methods, based on which it becomes possible to attain the desired technical effect in the inventive method.

The object of the invention is to eliminate the risk of defects in the manufacture of the blade without compromising the performance characteristics of the blade and increasing the complexity of its manufacture.

The technical effect of the invention is provided owing to the fact that at superplastic forming the working fluid is supplied in cavities between skin and core preforms through a tube mounted such that natural factors arising at the steps preceding the superplastic forming can be used for "unsticking" the skin and core preforms from each other.

In a method of manufacturing a hollow fan blade for a gas turbine engine using diffusion welding and superplastic forming, said blade consisting of titanium alloy skins and a core in the form of stiffening ribs, the steps are: assembling preforms of the skins and the core into a stack; preliminarily applying stop-off material in a predetermined screen pattern to areas where surfaces of the skin and core preforms come into contact, but are not to be bonded at diffusion welding, including a collector zone; also providing the skin preforms with a groove and the core preform with a slot for mounting at least one tube; sealing the stack along edges with the exception of where the at least one tube is to be mounted; mounting a tube and connecting it to the collector zone; removing oxygen as well as binder of the stop-off material from cavities of the stack; fully sealing the stack; heating the stack, and diffusion welding the preforms in predetermined areas, also along an entrance edge, an exit edge and a peripheral edge, to produce an integral structural preform; giving an airfoil shape to the integral structural preform; carrying out superplastic forming by supplying working fluid into cavities between the skin and core preforms using also at least one tube.

The method differs from the prior art method by the fact that the collector zone is disposed on the side of the stack, which corresponds to the peripheral edge of the blade; and, for mounting one or more tubes for supplying the working fluid at superplastic forming, the groove in the skin preforms and the slot in the core preform are provided at a distance from the outer boundary of the entrance edge or exit edge less than L/3, where L is the length of the blade chord along the peripheral edge.

The technical effect of the invention is also attained in the following cases:
- when one single tube is used to supply working fluid at superplastic forming, the groove and the slot for mounting the tube are provided at a distance from the outer boundary of the entrance or exit edge equal to L/6, where L is the length of the blade chord along the peripheral edge;
- when two tubes are used to supply working fluid at superplastic forming, the groove and the slot for mounting one of the tubes are provided at a distance from the outer boundary of the entrance edge equal to L/6, where L is the length of the blade chord along the peripheral edge, while for mounting the other tube the groove and the slot are provided at the same distance from the outer boundary of the exit edge.

Explanation of essence of the invention.

When the tube is mounted as described above, several natural factors, more particularly two, are working, which enable separation ("unsticking") of the core preform from the skin preforms in the collector zone at the initial time of superplastic forming. These factors will be now considered.

As mentioned in the description of the most relevant prior art, particles of the stop-off material after removing the binder therefrom have a tendency to come apart, so the stack of preforms must be handled with a great care before diffusion welding. Moreover, in the method [2] breaking the adhesive bond between the preforms and the stop-off material is accomplished after giving an airfoil shape to the integral structural preform, thereby preserving integrity of the integral structural preform during this step, which will be lost after breaking the adhesive bond between the preforms due to dispersion of particles of the stop-off material.

Thus, after breaking adhesive bonds the stop-off material in the form of individual particles is not already evenly distributed between surfaces of the skin and core preforms. If spaces between future stiffening ribs are considered, due to the tightness the process of dispersion of the stop-off material particles is not so strongly pronounced there as in the collector zone. In the collector zone almost all loose particles of the stop-off material fall down from the middle, most convex part of the integral structural preform toward the entrance or exit edge.

Near these edges the stop-off material particles provide a pronounced nontight adherence of the skin and core preforms to each other, in other words the lack of "sticking", and this is sufficient for passage of argon between them through the stop-off material particles.

The most intense disintegration of particles is observed just on the side of the peripheral edge. This is due to the presence of a wider chord of the blade at the periphery compared to the chord of the blade at the airfoil root, and also to a more free location of the peripheral edge in space compared to the airfoil root adjacent to the solid foot portion. For this reason, the feature that the tube or tubes for supplying a working fluid at superplastic forming are mounted on the side of the peripheral edge is significant, because together with the other distinctive features it influences the ability to provide a new technical effect. As mentioned above the known effect resides in preserving the strength of the airfoil in the root portion.

Now consider how the other factor, which occurs at the step of giving an airfoil shape to the integral structural preform, influences the process of "unsticking" the skin and core preforms from each other.

After diffusion welding the integral structural preform forms a plate consisting of a plurality of layers of sheet preforms, which are not joined in certain areas including the collector zone. Therefore, in formation of the shape of a pressure side and a suction side by bending, some layers of each skin preform will experience in these areas a compressive stress, while the others will experience a stretching stress. Layers of the pressure side preform, which are nearest to the core preform, will experience a stretching stress, while layers of the suction side preform will experience a compressive stress. As a result the much more flexible core preform will be clamped between relatively rigid skin preforms. The clamping pressure will depend on the magnitude of bend of the integral structural preform and, accordingly, it will be the smallest at the areas nearest to the entrance and exit edge, and the greatest in the central part. Due to a relatively short time of the steps of bending and twisting the considered stresses are subjected to a negligible relaxation and remain in the body of the preforms. In course of superplastic forming, high temperature and deformation lead to complete removal of residual stresses. But at the initial time of forming the effect of residual stresses must be overcome. Accordingly, it will be much easier to separate the core preform and the skin preforms, by starting the process from the least convex, almost straight, area of the integral structural preform. This factor, as the primary one, also contributes to the achievement of the technical effect of the invention.

Finally, consider the nature of deformation of the core and skin preforms in the process of superplastic forming, including the collector zone.

As already mentioned, the pressure side preform stays almost non-deformed in all areas. The suction side preform is subjected in all areas to a sufficiently intense deformation like that occurring in forming a spherical shell. The core preform experiences bending and tension during formation of stiffening ribs in main sections, which occur under the influence of its joints with the skin preforms in a predetermined pattern. The suction side preform, while lifting, as if pulls the core preform, while the pressure side preform remains at its place. Stretching of the core preform in the main sections of the integral structural preform is almost uniaxial.

The process of stretching the core preform in the collector zone, which precedes and further accompanies the formation of stiffening ribs, is also influenced by the joint places of the core preform with the skin preforms in a predetermined pattern. But deformation of the core preform in the collector zone is somewhat different from its deformation during forming stiffening ribs in the main sections of the integral structural preform because the process of deformation of the core preform in the collector zone is still influenced by joining the core preform with both skin preforms on the peripheral edge. As a result, stretching the core preform in the collector zone occurs in several axes differently directed in space. In this case, deformation of the core preform is also behind deformation of the suction side preform, but ahead of virtually zero deformation of the pressure side preform. This fact in all known methods leads to separation of the preforms and formation of two cavities in the collector zone. However, at "sticking" the preforms, the separation process will be accompanied by misalignment of the core preform. In the presence of factors that provide an advantageous beginning of the process of separation of the preforms as in the inventive method or as in the method [4], the separation will occur without misalignment of the core preform.

The claims define the simplest relation for determining the location of at least one tube through which argon is supplied at superplastic forming. The tube or tubes is mounted at a distance from the outer boundary of the entrance or exit edge less than L/3, where L is the length of the blade chord along the peripheral edge.

If the dimension is exceeded, the tube will be mounted in the middle convex portion of the integral structural preform, from which practically all particles of the stop-off material have already fallen down closer to the internal boundary of the entrance and exit edge, that is, to corners of the collector zone. At the same place the core preform is tightly clamped before forming between skin preforms. As a result both of the discussed above factors for "unsticking" the skin and core preforms cannot be used.

In the present method, as in the most relevant one, multiple tubes can be used for accomplishing various steps [2].

When multiple, in particular two, tubes are used for supplying a working fluid at superplastic forming all the tubes are mounted at a distance less than L/3, where L is the length of the blade chord along the peripheral edge.

When at least one tube for supplying a working fluid at superplastic forming is mounted in the central part of the integral structural preform, misalignment of the core preform becomes possible. Tubes to be used in other steps of the method, in particular, in removing oxygen from cavities of the integral structural preform can be mounted in the central part.

The groove and the slot for mounting one tube for supplying a working fluid at superplastic forming are most preferably provided at a distance from the outer boundary of the entrance or exit edge equal to L/6, where L is the length of the blade chord along the peripheral edge, i.e. closer to edges. There the greatest number of fallen particles of the stop-off material is found and the bend of the skin preforms have the least impact.

When two tubes are used to supply a working fluid at superplastic forming it is recommended to provide the groove and the slot for mounting one of the tubes at a distance from the outer boundary of the entrance edge equal to L/6, where L is the length of the blade chord along the peripheral edge. The other tube is recommended to be mounted at the same distance from the outer boundary of the exit edge. This strategy enables avoiding the provision of several slots and grooves on a fairly small segment of the blade chord length.

The inventive method of manufacturing a hollow fan blade is illustrated in the drawings:
Fig. 1 is a schematic view of a stack of preforms in the process of its assembly before the step of diffusion welding;
Fig. 2 is a cross section of a blade airfoil in the collector zone before the step of superplastic forming;
Fig. 3 is a cross section of a finished blade;
Fig. 4 is a photograph of a finished blade.

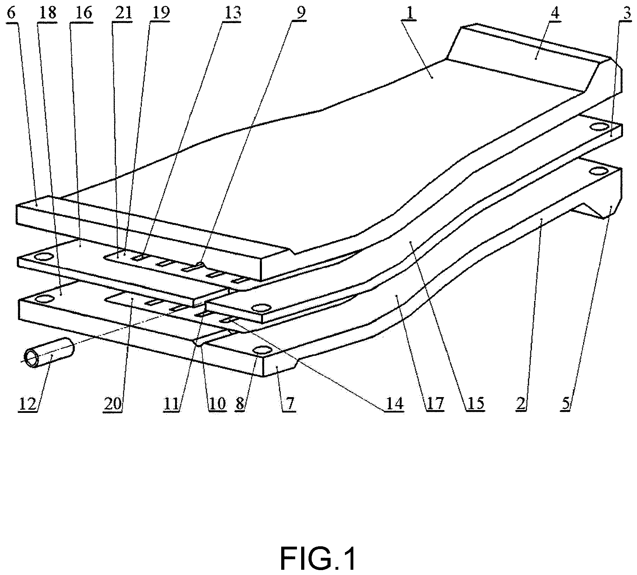

A stack (Fig.1) includes of skin preforms 1, 2 and a core preform 3. Surfaces of the core preform and surfaces of the skin preforms, which contact the core preform, are flat.

Outer surface of the skin preforms 1, 2 comprises projections 4, 5 for a foot part of the blade. In addition, the outer surface of the skin preforms on the side of the peripheral edge comprises technological projections 6, 7. The technological projections 6, 7 are designed to hold the integral structural preform resulting from diffusion welding in the step of giving an airfoil shape to the integral structural preform. The skin and core preforms have holes 8 for locating pins (not shown in Fig. 1), which are needed to assemble the stack. On the side of the peripheral edge the skin preforms have grooves 9, 10. The core preform has at the same place a slot 11 corresponding to the grooves. The grooves and the slot are used to mount a tube 12 for supplying argon first into cavities of the stack, and then into cavities of the integral structural preform in course of various steps associated with removal of oxygen from cavities of the stack and the integral structural preform. The same tube can be used to inject argon into cavities of the integral structural preform in the step of breaking the adhesive bond between the preforms and the stop-off material. A tube for supplying argon at superplastic forming is not shown in Fig. 1, but it is mounted at the same place as the tube 12, after dismounting the latter, therefore, the tube 12 is mounted strictly at the distance chosen in accordance with the recommendations of the claimed method from the outer boundary of the entrance or exit edge. Areas 13 on the surface of the core preform 3 and respective areas (not shown in Fig. 1) on the skin preform 1, and areas 14 on the surface of the skin preform 2 and respective areas on the surface (not shown in Fig. 1) of the core preform 3 are to be bonded by diffusion welding. All three preforms are also bonded on the perimeter, including the projections 4, 5, 6, 7 and the edges 15, 16, 17, 18. Width of the bonded zone over the perimeter of the blade is computed such that after removal of the technological projections 6, 7 and machining allowances the finished blade has a predetermined width of the foot part, entrance, exit and peripheral edges. Area 19 on the core preform 3, which is in contact with the respective area of the skin preform 1 (not shown), and area 20 on the skin preform 2, which is in contact with the respective area of the core preform 3 (not shown), are not to be bonded in diffusion welding and are intended for formation of the collector zone 21.

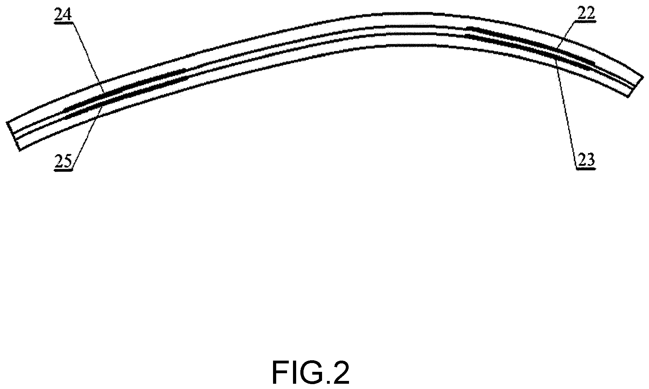

Fig. 2 shows a cross section of the blade airfoil in the collector zone before starting the step of superplastic forming; reference numerals 22, 23, 24, 25 show places of conglomeration of particles of the stop-off material.

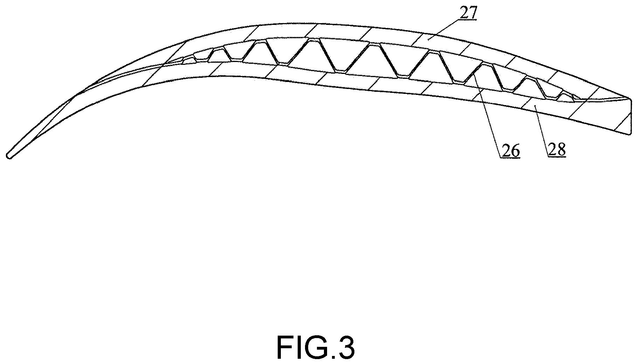

Fig. 3 shows a cross section of a finished blade airfoil after machining.

Fig. 4 shows a photograph of a finished blade, demonstrating the extent to which the chord of the peripheral edge of the blade is greater that the chord of the root of the blade airfoil.

The method is accomplished as follows:
Primary skin preforms are flat plates or sheets having a sufficient thickness to form the foot part. Primary core preform is a thin sheet.
Primary skin and core preforms are subjected to machining to provide a predetermined shape of the blade in the meridional plane [1] and thickness of the skins in the airfoil area, and projections 4, 5 for a foot part of the blade and technological projections 6, 7, respectively. Surfaces of the skin and core preforms are prepared for diffusion welding by grinding and polishing. Immediately before welding the preform surfaces to be bonded are chemically cleaned.

A stop-off material is applied by screen printing to the areas of contacting flat surfaces of the skin preforms 1, 2 and the core preform 3, which are not to be bonded, to prevent bonding the areas in the diffusion welding process. The stop-off material is also applied to the areas of contacting surfaces of the skin preforms 1, 2 and the core preform 3 to form a collector zone 21 along the peripheral edge. Stop-off material may include yttrium powder distributed in a binder, and a solvent. The preforms 1, 2, 3 are assembled into a stack and secured to each other using pins mounted in holes 8. Then, a tube 12 is attached to the collector zone. The tube 12 is mounted on the side of the peripheral edge such that the areas of all the preforms, which are not to be bonded, are connected to each other. The tube is mounted at a distance from the outer boundary edge of the entrance or exit edge no more than L/3, where L is the length of the blade chord along the peripheral edge.

As mentioned above, a plurality of tubes may be mounted, if required, such that each tube will connect areas, not to be bonded, on adjacent surfaces of the preforms of each of the skins and the core. In this case, regardless of the total number of tubes, the tubes to be used for supplying a working fluid in superplastic forming are mounted at the end of the integral structural preform on the side of the peripheral edge at a distance from the outer boundary edge of the entrance or exit edge no more than L/3, where L is the length of the blade chord along the peripheral edge.

The tube 12 is mounted such that it protrudes beyond the stack contour, because a pipe will be further connected to the protruding end of the tube (not shown in Fig. 1) to connect the tube 12 alternately to a vacuum pump and an inert gas supply system. All three preforms 1, 2, 3 are joined together on the perimeter by argon arc welding. The tube 12 is also secured by argon arc welding. The resulting assembly unit is hermetically sealed, with the exception of the entrance of the tube 12.

Cavities in the stack are evacuated. Then inert gas such as argon is injected into stack cavities. After injection of argon the stack cavities are evacuated, and argon is injected in the stack cavities again. Argon is injected into stack cavities under a pressure reaching the level of atmospheric pressure. It is recommended to monitor the level of oxygen in the argon removed in the evacuation process. Multiple successive evacuation and injection of argon should be carried out up to complete removal of oxygen from the stack cavities.

Further, the stack is installed in a furnace where it is heated to a temperature of 250-350°C to evaporate the binder from the stop-off material under continuous evacuation of the stack cavities. The stack is removed from the furnace and cooled at continued evacuation. Presence of residues of the binder is detected by monitoring its level in gas removed during evacuation. Then the tube 12 is sealed, and the stack is transferred to a hot isostatic press. The preforms are subjected to diffusion welding.

Next, the integral structural preform is bent and its airfoil is twisted by a dedicated device like that described in patent [6]. Bending and twisting are performed by hot deformation. At the final step of twisting the shape of the bent integral structural preform is adjusted in accordance with a predetermined shape of the die used for superplastic forming. A die dedicated for superplastic forming can be used. Split halves of the die come into contact with the integral structural preform on the part of edges, which will be further removed. The step of giving an airfoil shape to the integral structural preform is preferably accomplished in an inert gas environment to prevent rapid oxidation of external surfaces of the structure.

In the next step, argon is injected into cavities of the integral structural preform under a pressure reaching the level of atmospheric pressure at room temperature in order to break the adhesive bond between the preforms and the stop-off material. After pressure relief, cavities of the integral structural preform are evacuated and sealed.

To accomplish superplastic forming the integral structural preform is placed between appropriately shaped split halves of the die. The structure is heated and subjected to superplastic deformation. This step is also preferably accomplished in an inert gas environment to prevent rapid oxidation of the external surface of the integral structural preform. Deformation is performed by pressure of the working fluid supplied to cavities in the integral structural preform such that to provide the speed of superplastic deformation. The working fluid is commonly argon.

Upon the deformation the skin preforms take the shape of the working cavity of the die, and the core preform forms slope stiffening ribs.

After the step of superplastic forming the semi-finished blade is subjected to mechanical machining to remove process parts of the edges and projections on the side of the peripheral edge; edges of the blade airfoil and the blade foot are ultimately formed. Furthermore, all the tubes are dismounted, and remaining holes are closed up.

Fig. 3 shows a cross section of the blade airfoil after machining.

The hollow fan blade is made of a titanium alloy. The most common titanium alloy used for the manufacture of such products in Russia and abroad is VT6 alloy (Ti-6A1-4V). However, this does not preclude the use of other titanium alloys for manufacture of the blade.

According to the inventive method a hollow fan blade with a complex airfoil shape was fabricated, the structure of which complied with the description provided in [1]. The blade was made of BT6 alloy.

Primary skin preforms were plates with the average grain size of 6 µm. Primary core preform was a sheet with the thickness of 1 mm and the average grain size of 2 µm. Surfaces of the skins and core preforms were flat throughout the entire area.

Given the average size of grains in the skin and core preforms the following diffusion welding conditions were chosen:
welding temperature 920°C;
isostatic pressure applied to the stack of preforms 3 MPa;
welding time about two hours, with the exception of time of heating the stack for welding.

The step of giving an airfoil shape to the integral structural preform was carried out at the temperature of 800°C. The step duration, with the exception of time of heating the integral structural preform, was about 30 min.

The step of breaking the adhesive bond between the skin preforms and the core preform and the stop-off material was accomplished at room temperature, and the argon pressure was chosen as required for elastic deformation of the skin preforms.

Superplastic forming was accomplished at the temperature of 920°C; argon was injected under pressure by a special schedule to provide the deformation speed of the core preform in superplasticity regime.

The superplastic forming lasted for about 2-3 hours.

In all steps of the method, associated with supplying argon into cavities of the integral structural preform, a tube was used that was mounted in the place chosen on the basis of the relation given in the description of the method, particularly, at a distance from the outer boundary of the exit edge equal to L/3, where L is the length of the blade chord along the peripheral edge.

In superplastic forming, uniform rise of the suction side preform was controlled, especially at the initial time of superplastic forming.

The suction side was rising uniformly. The finished blade was subjected to non-destructive testing. No misalignment of the core preform in the collector zone was found. Both these facts confirm the absence of "sticking" the core and skin preforms in the collector zone at the initial time of superplastic forming.

Fig. 4 shows a photograph of a finished blade after machining.

The inventive technical solution is intended to be used in the manufacture of a hollow fan blade in industrial-scale production.

Cited references:
1. Patent RU 2354854, IPC F04D 29/32, F04D 29/38, 2009.
2. European Patent EP 0568201 B1, IPC B21D 53/78, B21D 26/02, B21D 11/14.
3. Patent RU 2477191, IPC B21D 53/78, B21D 26/02, B23K 20/18, B23K 101/02, 2013.
4. European Application EP 2223767 A1, IPC B23K 20/02, B21D 53/78, F01D 5/14, B23K 20/18, B23P 15/04, 2010.
5. Patent RU 2291019, IPC B21D 53/78, B21D 26/02, 2007.
6. Patent GB 2073631, B21D 11/14, 1980

Further prior art may be found in EP 1 188 497 A2 describing a method for manufacturing an article, for example, a fan blade, by diffusion bonding.

## Claims

1. A method of manufacturing a hollow fan blade for a gas turbine engine using diffusion welding and superplastic forming, said blade consisting of titanium alloy skins and a core in the form of stiffening ribs, wherein the method comprising:
assembling preforms of the skins (1, 2) and the core (3) into a stack;
preliminarily applying stop-off material in a predetermined screen pattern to areas where surfaces of the skin and core preforms come into contact, but are not to be bonded at diffusion welding, including a collector zone; also
providing the skin preforms with a groove (9, 10) and the core preform with a slot (11) for mounting at least one tube;
sealing the stack along edges with the exception of where the at least one tube is to be mounted;
mounting a tube (12) and connecting it to the collector zone;
removing oxygen and binder of the stop-off material from cavities of the stack;
fully sealing the stack;
heating the stack, and diffusion welding the preforms in predetermined areas (13, 14), also along an entrance edge, an exit edge and a peripheral edge, to produce an integral structural preform;
giving an airfoil shape to the integral structural preform;
carrying out superplastic forming by supplying working fluid into cavities between the skin and core preforms using also at least one tube,
said method **characterized in that**
the collector zone is disposed on the side of the stack, which corresponds to the peripheral edge of the blade; and,
for mounting one or more tubes for supplying the working fluid at superplastic forming, the groove in the skin preforms and the slot in the core preform are provided at a distance from the outer boundary of the entrance edge or exit edge less than L/3, where L is the length of the blade chord along the peripheral edge.

2. The method according to claim 1, **characterized in that**
when one single tube is used for supplying the working fluid at superplastic forming, the groove and the slot for mounting the tube are provided at a distance from the outer boundary of the entrance or the exit edge equal to L/6, where L is the length of the blade chord along the peripheral edge.

3. The method according to claim 1, **characterized in that**
when two tubes are used for supplying the working fluid at superplastic forming, the groove and the slot for mounting one of the tubes are provided at a distance from the outer boundary of the entrance edge equal to L/6, where L is the length of the blade chord along the peripheral edge, while the groove and the slot for mounting the other tube are provided at the same distance from the outer boundary of the exit edge.

## Patentansprüche

1. Verfahren zur Herstellung einer hohlen Gebläseschaufel für ein Gasturbinentriebwerk unter Verwendung von Diffusionsschweißen und superplastischer Formgebung, wobei die Schaufel aus Titanlegierungsschalen und einem Kern in der Form von Versteifungsrippen besteht, wobei das Verfahren umfassend:
Zusammenbauen von Vorformlingen der Schalen (1, 2) und des Kerns (3) zu einem Stapel;
vorläufiges Aufbringen von Trennmaterial in einem vorbestimmten Gittermuster auf Bereichen, wo Oberflächen der Schalen- und Kernvorformlige in Kontakt gelangen, aber bei Diffusionsschweißen nicht gebunden werden sollen, beinhaltend eine Kollektorzone; sowie
Versehen der Schalenvorformlinge mit einer Rille (9, 10) und des Kernvorformlings mit einem Schlitz (11) zur Montage mindestens eines Rohrs;
Abdichten des Stapels entlang Rändern mit der Ausnahme jener Stelle, wo das mindestens eine Rohr zu montieren ist;
Montieren eines Rohrs (12) und Verbinden dieses mit der Kollektorzone;
Entfernen von Sauerstoff und Bindemittel des Trennmaterials aus Hohlräumen des Stapels;
vollständiges Abdichten des Stapels;
Erhitzen des Stapels und Diffusionsschweißen der Vorformlinge in vorbestimmten Bereichen (13, 14), auch entlang eines Eintrittsrandes, eines Austrittsrandes und eines peripheren Randes, um einen einstückigen strukturellen Vorformling zu erzeugen;
Verleihen dem einstückigen strukturellen Vorformling einer Tragflügelform;
Ausführen einer superplastischen Formgebung durch Zuleiten von Arbeitsfluid in Hohlräume zwischen den Schalen- und Kernvorformlingen unter Verwendung auch mindestens eines Rohrs,
wobei das Verfahren **dadurch gekennzeichnet ist, dass**
die Kollektorzone an der Seite des Stapels angeordnet ist, die dem peripheren Rand der Schaufel entspricht; und
zur Montage eines oder mehrerer Rohre zum Zuleiten des Arbeitsfluids bei superplastischer Formgebung die Rille in den Schalenvorformlingen und der Schlitz in dem Kernvorformling mit einem Abstand von der äußeren Grenze des Eintrittsrands oder Austrittsrands von weniger als L/3 bereitgestellt sind, wo L die Länge der Schaufelsehne entlang des peripheren Rands ist.

2. Verfahren nach Anspruch 1, **dadurch gekennzeichnet, dass**,
wenn ein einzelnes Rohr zum Zuleiten des Arbeitsfluids bei superplastischer Formgebung verwendet wird, die Rille und der Schlitz zur Montage des Rohrs in einem Abstand von der äußeren Grenze des Eintritts- oder des Austrittsrands gleich L/6 bereitgestellt sind, wo L die Länge der Schaufelsehne entlang des peripheren Rands ist.

3. Verfahren nach Anspruch 1, **dadurch gekennzeichnet, dass**,
wenn zwei Rohre zum Zuleiten des Arbeitsfluids bei superplastischer Formgebung verwendet werden, die Rille und der Schlitz zur Montage eines der Rohre in einem Abstand von der äußeren Grenze des Eintrittsrands gleich L/6 bereitgestellt sind, wo L die Länge der Schaufelsehne entlang des peripheren Rands ist, während die Rille und der Schlitz zur Montage des anderen Rohrs in demselben Abstand von der äußeren Grenze des Austrittsrands bereitgestellt sind.

## Revendications

1. Procédé de fabrication d'une pale de soufflante creuse pour une turbine à gaz utilisant un soudage par diffusion et un formage superplastique, ladite pale consistant en des revêtements en alliage de titane et une âme sous la forme de nervures de renforcement, dans lequel le procédé comprenant :
un assemblage de préformes des revêtements (1, 2) et de l'âme (3) en une pile ;
une application préliminaire d'un matériau d'arrêt en un motif de grille prédéterminé sur des régions où des surfaces des préformes de revêtements et d'âme entrent en contact, mais ne doivent pas être liées lors d'un soudage par diffusion, y compris une zone de collecteur ; également
une fourniture aux préformes de revêtements d'une rainure (9, 10) et à la préforme d'âme d'une fente (11) permettant de monter au moins un tube ;
un scellement de la pile le long d'arêtes à l'exception d'où le au moins un tube doit être monté ;
un montage d'un tube (12) et un raccordement de celui-ci à la zone de collecteur ;
un retrait de l'oxygène et du liant du matériau d'arrêt des cavités de la pile ;
un scellement complet de la pile ;
un chauffage de la pile, et un soudage par diffusion des préformes dans des régions prédéterminées (13, 14), également le long d'une arête d'entrée, d'une arête de sortie et d'une arête périphérique, pour produire une préforme structurelle d'un seul tenant ;
un octroi d'une forme de surface portante à la préforme structurelle d'un seul tenant;
une réalisation d'un formage superplastique en fournissant un fluide de travail dans des cavités entre les préformes de revêtements et d'âme en utilisant également au moins un tube,
ledit procédé étant **caractérisé en ce que**
la zone de collecteur est disposée sur le côté de la pile, qui correspond à l'arête périphérique de la pale ; et,
pour monter un ou plusieurs tubes permettant de fournir le fluide de travail lors d'un formage superplastique, la rainure dans les préformes de revêtements et la fente dans la préforme d'âme sont prévues à une distance à partir de la limite extérieure de l'arête d'entrée ou de l'arête de sortie inférieure à L/3, où L est la longueur de la corde de pale le long de l'arête périphérique.

2. Procédé selon la revendication 1, **caractérisé en ce que**
lorsqu'un seul tube est utilisé pour fournir le fluide de travail lors d'un formage superplastique, la rainure et la fente permettant de monter le tube sont prévues à une distance à partir de la limite extérieure de l'arête d'entrée ou de sortie égale à L/6, où L est la longueur de la corde de pale le long de l'arête périphérique.

3. Procédé selon la revendication 1, **caractérisé en ce que**
lorsque deux tubes sont utilisés pour fournir le fluide de travail lors d'un formage superplastique, la rainure et la fente permettant de monter l'un des tubes sont prévues à une distance à partir de la limite extérieure de l'arête d'entrée égale à L/6, où L est la longueur de la corde de pale le long de l'arête périphérique, tandis que la rainure et la fente permettant de monter l'autre tube sont prévues à la même distance à partir de la limite extérieure de l'arête de sortie.
